# EUROPEAN PATENT APPLICATION

(11) **EP 4 770 180 A1**
(43) Date of publication of application: **01.07.2026**
(21) Application number: 23953714.5
(22) Date of filing: 28.09.2023
(51) Int. Cl.: H04W 24/08

(54) **COMMUNICATION METHOD AND COMMUNICATION APPARATUS**

(71) Applicant: HUAWEI TECHNOLOGIES CO., LTD., Shenzhen, Guangdong 518129 (CN)
(72) Inventor: LI, Jiahui, Shenzhen, Guangdong 518129 (CN); MA, Mengyao, Shenzhen, Guangdong 518129 (CN); MA, He, Shenzhen, Guangdong 518129 (CN); LUO, Jiajin, Shenzhen, Guangdong 518129 (CN)
(74) Representative: Goddar, Heinz J.
(86) International application number: PCT/CN2023/122732
(87) International publication number: WO 2025/065567

(57) **Abstract**

This application provides a communication method. The method includes: A first device obtains first information. The first device collects second data of a first environment based on the first information, where the second data is incremental data relative to first data of the first environment. The first device sends second information to a second device, where the second information includes the second data. According to the communication method and the communication apparatus, during multi-device data fusion, after collecting new data, a device does not need to send all sensed data to a peer device, but sends incremental data (new data or updated data), relative to existing data, of all the sensed data. Because a part of data that overlaps existing data of a target device does not need to be sent to the target device, transmission overheads of the device can be reduced, to improve efficiency of data transmission and utilization of transmission resources.

## Description

### TECHNICAL FIELD

This application relates to the field of communication technologies, and more specifically, to a communication method and a communication apparatus.

### BACKGROUND

With increasingly diversified application scenarios of wireless communication, a next-generation wireless communication process is oriented to more new scenarios, including sensing, imaging, environment reconstruction, and the like. For example, during environment reconstruction, a plurality of devices or sensors may sense or observe a same environment from different angles of view. Therefore, sensing results of the plurality of devices may be sent to a base station (a central server) and fused into a complete environment map corresponding to the environment, or another sensing task is performed based on a fusion result, to reduce power consumption and transmission overheads of each device. In addition, because the devices may observe different angles of view, blocking or a blind area caused by an obstacle may be addressed by fusing the sensing results of the plurality of devices, to achieve finer-grained reconstruction or better task execution effect.

Currently, during multi-device data fusion, a device sends all sensed data to a base station, leading to a large data transmission size and low data transmission efficiency. Therefore, how to improve data transmission efficiency during multi-data fusion becomes an urgent problem to be resolved.

### SUMMARY

This application provides a communication method and a communication apparatus. According to the communication method and the communication apparatus, during multi-device data fusion, after collecting new data, a device does not need to send all sensed data to a peer device, but sends incremental data (new data or updated data), relative to existing data, of all the sensed data. Because a part of data that overlaps existing data of a target device does not need to be sent to the target device, transmission overheads of the device can be reduced, to improve efficiency of data transmission and utilization of transmission resources.

According to a first aspect, a communication method is provided. The method includes: A first device obtains first information. The first device collects second data of a first environment based on the first information, where the second data is incremental data relative to first data of the first environment. The first device sends second information to a second device, where the second information includes the second data.

In some implementations, the second information further includes one or more of a geometry type of the second data, attribute information of the second data, and a relative positional relationship between the second data and the first data.

Optionally, the geometry type includes at least one of the following: a point, a line, a surface, a voxel, a sphere, a polyhedron, and an octree; and the attribute information includes at least one of the following: texture pixel density, a color, magnetic permeability, a dielectric constant, and a scattering coefficient.

In this embodiment of this application, during multi-device data fusion, after collecting new data, a device does not need to send all sensed data to a peer device, but sends incremental data (new data or updated data), relative to existing data, of all the sensed data. Because a part of data that overlaps existing data of a target device does not need to be sent to the target device, transmission overheads of the device can be reduced, to improve efficiency of data transmission and utilization of transmission resources.

With reference to the first aspect, in some implementations of the first aspect, that the first device obtains the first information includes: The first device receives the first information sent by the second device, where the first information includes one or more of a geometry type of the first data, attribute information of the first data, and position information of the first data.

In some implementations, the first information further includes resolution information of the first data and/or a first environment map corresponding to the first data.

In this embodiment of this application, when original data and incremental data are not collected by a same device, a device for collecting the incremental data receives related information of the original data, for example, a geometry type, position information, or a corresponding environment map of the original data, and the device can further collect the incremental data based on the related information of the original data. During this process, not all of the original data needs to be sent between different devices, so that transmission overheads of the device can be further reduced, to improve efficiency of data transmission and utilization of transmission resources.

With reference to the first aspect, in some implementations of the first aspect, that the first device obtains the first information includes: The first device collects the first information, where the first information includes the first data of the first environment.

In this embodiment of this application, when original data and incremental data are collected by a same device, a device for collecting the incremental data directly collects the incremental data based on the original data. During this process, the device does not need to extract related information from the original data, so that device overheads can be reduced.

With reference to the first aspect, in some implementations of the first aspect, before the first device sends the second information to the second device, the method further includes: The first device sends the first data of the first environment to the second device.

In this embodiment of this application, when original data and incremental data are collected by a same device, a device for collecting the original data sends the collected original data to a peer device. In this way, when subsequently receiving the incremental data, the peer device can perform a task, for example, an environment map update, based on the original data and the incremental data, to improve a sensing capability of the peer device.

With reference to the first aspect, in some implementations of the first aspect, that the first device sends the second information to the second device includes: The first device sends the second information to the second device when the first device detects that a degree of variation of a reference object of the second data relative to a reference object of the first data is greater than a first threshold.

Optionally, the reference object includes a reference point, and/or the reference object includes a normal vector. When the reference object is the reference point, the degree of variation of the reference object of the second data is a value of a distance between a reference point of the first data and a reference point of the second data; or when the reference object is the normal vector, the degree of variation of the reference object of the second data is an included angle between a normal vector of the first data and a normal vector of the second data.

In some implementations, the "degree of variation" may be replaced with a "range of variation".

In this embodiment of this application, during multi-device data fusion, a device for collecting incremental data sends corresponding incremental data to a peer device only when detecting that a degree of variation of environmental data reaches a degree at which a map needs to be updated. This can avoid frequent unnecessary data sending/receiving operations when data does not need to be updated, and can further reduce transmission overheads of the device, to improve utilization of transmission resources.

With reference to the first aspect, in some implementations of the first aspect, that the first device sends the second information to the second device includes: The first device receives a first request message sent by the second device, where the first request message is used to request to obtain the second information. The first device sends the second information to the second device in response to the first request message.

In this embodiment of this application, during multi-device data fusion, a device for collecting incremental data collects and sends incremental data only when receiving a request message sent by another device. This can avoid frequent unnecessary data sending/receiving operations when data does not need to be updated, and can further reduce transmission overheads of the device, to improve utilization of transmission resources.

With reference to the first aspect, in some implementations of the first aspect, before the first device sends the second information to the second device, the method further includes: The first device receives first indication information sent by the second device, where the first indication information indicates one or more of a geometry type supported by the second device, attribute information supported by the second device, and a position information indication manner supported by the second device.

In this embodiment of this application, each of a plurality of devices may pre-notify another device of capability information of the device. In this way, when sending a related message to the device, the another device can send a message of a type supported by the device, to further improve utilization of transmission resources.

With reference to the first aspect, in some implementations of the first aspect, before the first device sends the second information to the second device, the method further includes: The first device receives first configuration information sent by the second device, where the first configuration information is used to configure the reference object and the first threshold.

In this embodiment of this application, a condition for triggering transmission may be preconfigured between a plurality of devices. In this way, a device sends or requests to obtain incremental data only when detecting that a degree of variation of current environmental data reaches a degree at which an environment map needs to be updated (in other words, the configured condition for triggering transmission is met), to further reduce transmission overheads of the device and improve utilization of transmission resources.

According to a second aspect, a communication method is provided. The method includes: A second device obtains first data of a first environment. The second device sends first information to a first device based on the first data, where the first information is used for the first device to collect second data of the first environment, the second data is incremental data relative to the first data, and the first information includes one or more of a geometry type of the first data, attribute information of the first data, and position information of the first data. The second device receives second information sent by the first device, where the second information includes the second data.

In some implementations, the first information further includes resolution information of the first data and/or a first environment map corresponding to the first data.

In some implementations, the second information further includes one or more of a geometry type of the second data, attribute information of the second data, and a relative positional relationship of the first data.

Optionally, the geometry type includes at least one of the following: a point, a line, a surface, a voxel, a sphere, a polyhedron, and an octree; and the attribute information includes at least one of the following: texture pixel density, a color, magnetic permeability, a dielectric constant, and a scattering coefficient.

In this embodiment of this application,
with reference to the second aspect, in some implementations of the first aspect, that the second device obtains the first data of the first environment includes: The second device receives the first data of the first environment that is sent by a third device, where the third device is different from the first device.

In this embodiment of this application, during multi-device data fusion, after collecting new data, a device does not need to send all sensed data to a peer device, but sends incremental data (new data or updated data), relative to existing data, of all the sensed data. Because a part of data that overlaps existing data of a target device does not need to be sent to the target device, transmission overheads of the device can be reduced, to improve efficiency of data transmission and utilization of transmission resources.

With reference to the second aspect, in some implementations of the first aspect, that the second device obtains the first data of the first environment includes: The second device collects the first data of the first environment.

In this embodiment of this application, when original data and incremental data are not collected by a same device, a device for collecting the incremental data receives related information of the original data, for example, a geometry type, position information, or a corresponding environment map of the original data, and the device can further collect the incremental data based on the related information of the original data. During this process, not all of the original data needs to be sent between different devices, so that transmission overheads of the device can be further reduced, to improve efficiency of data transmission and utilization of transmission resources.

With reference to the second aspect, in some implementations of the first aspect, before the second device receives the second information sent by the first device, the method further includes: The second device sends a first request message to the first device when detecting that a degree of variation of a reference object of the second data relative to a reference object of the first data is greater than a first threshold, where the first request message is used to request to obtain the second information.

In this embodiment of this application, during multi-device data fusion, when detecting that a degree of variation of environmental data reaches a degree at which a map needs to be updated, a device requests to obtain incremental data from a device for collecting the incremental data, to update an environment map. This can avoid frequent unnecessary data sending/receiving operations when data does not need to be updated, and can further reduce transmission overheads of the device, to improve utilization of transmission resources.

With reference to the second aspect, in some implementations of the first aspect, that the second device receives the second information sent by the first device includes: The second device receives the second information sent by the first device when the first device detects that a degree of variation of a reference object of the second data relative to a reference object of the first data is greater than a first threshold.

Optionally, the reference object includes a reference point, and/or the reference object includes a normal vector. When the reference object is the reference point, the degree of variation of the reference object of the second data is a value of a distance between a reference point of the first data and a reference point of the second data; or when the reference object is the normal vector, the degree of variation of the reference object of the second data is an included angle between a normal vector of the first data and a normal vector of the second data.

In this embodiment of this application, during multi-device data fusion, a device for collecting incremental data sends corresponding incremental data to a peer device only when detecting that a degree of variation of environmental data reaches a degree at which a map needs to be updated. This can avoid frequent unnecessary data sending/receiving operations when data does not need to be updated, and can further reduce transmission overheads of the device, to improve utilization of transmission resources.

With reference to the second aspect, in some implementations of the first aspect, before the second device sends the first information based on the first data, the method further includes: The second device sends first indication information to the first device, where the first indication information indicates one or more of a geometry type supported by the second device, attribute information supported by the second device, and a position information indication manner supported by the second device.

In this embodiment of this application, each of a plurality of devices may pre-notify another device of capability information of the device. In this way, when sending a related message to the device, the another device can send a message of a type supported by the device, to further improve utilization of transmission resources.

With reference to the second aspect, in some implementations of the first aspect, before sending the first request message to the first device, the method further includes: The second device receives first configuration information sent by the first device, where the first configuration information is used to configure the reference object and the first threshold.

In this embodiment of this application, a condition for triggering transmission may be preconfigured between a plurality of devices. In this way, a device sends or requests to obtain incremental data only when detecting that a degree of variation of current environmental data reaches a degree at which an environment map needs to be updated (in other words, the configured condition for triggering transmission is met), to further reduce transmission overheads of the device and improve utilization of transmission resources.

According to a third aspect, a communication device is provided. The device is configured to perform any one of the first aspect or the implementations of the first aspect. Specifically, the device includes a processor and a memory. The memory is configured to store a computer program. The processor is configured to invoke the computer program from the memory and run the computer program, to enable the device to perform any one of the first aspect or the implementations of the first aspect.

With reference to the third aspect, in some implementations of the first aspect, the device is a network device or a terminal device.

According to a fourth aspect, a communication device is provided. The device is configured to perform any one of the second aspect or the implementations of the second aspect. Specifically, the device includes a processor and a memory. The memory is configured to store a computer program. The processor is configured to invoke the computer program from the memory and run the computer program, to enable the device to perform any one of the second aspect or the implementations of the second aspect.

With reference to the fourth aspect, in some implementations of the first aspect, the device is a network device or a terminal device.

According to a fifth aspect, a communication apparatus is provided. The communication apparatus is configured to perform the method provided in any one of the first aspect or the implementations of the first aspect, or the communication apparatus is configured to perform the method provided in any one of the second aspect or the implementations of the second aspect. Specifically, the communication apparatus may include a unit and/or a module (for example, a processing unit and a transceiver unit) for performing the method provided in any one of the first aspect, the second aspect, or the implementations of the first aspect or the second aspect.

In an implementation, the communication apparatus is a terminal device. When the communication apparatus is the terminal device, the transceiver unit may be a transceiver or an input/output interface, and the processing unit may be at least one processor. Optionally, the transceiver may be a transceiver circuit. Optionally, the input/output interface may be an input/output circuit.

In another implementation, the communication apparatus may be a chip, a chip system, or a circuit in a terminal device. In this case, the transceiver unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to a sixth aspect, this application provides a processor, configured to perform the methods provided in the first aspect and the second aspect.

Sending, obtaining/receiving, and other operations related to the processor may be understood as output, receiving/input, and other operations of the processor, or sending and receiving operations performed by a radio frequency circuit and an antenna, unless otherwise specified or the operations conflict with actual functions or internal logic of the operations in related descriptions. This is not limited in this application.

According to a seventh aspect, a computer-readable storage medium is provided. The computer-readable storage medium stores a computer program. When the computer program is run on a communication apparatus, the communication apparatus is enabled to perform the method according to any one of the implementations of the first aspect and the second aspect.

According to an eighth aspect, a computer program product including instructions is provided. When the computer program product is run on a computer, the computer is enabled to perform the method provided in any one of the implementations of the first aspect and the second aspect.

According to a ninth aspect, a chip is provided. The chip includes a processor and a communication interface. The processor reads instructions through the communication interface, to perform the method provided in any one of the implementations of the first aspect and the second aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method provided in any one of the implementations of the first aspect and the second aspect.

According to a tenth aspect, a communication system is provided, including the device provided in any one of the third aspect or the implementations of the third aspect, and/or including the device provided in any one of the fourth aspect or the implementations of the fourth aspect.

### BRIEF DESCRIPTION OF DRAWINGS

FIG. 1 is a diagram of an application scenario to which an embodiment of this application is applicable;
FIG. 2 is a schematic flowchart of a communication method according to an embodiment of this application;
FIG. 3 is a schematic flowchart of another communication method according to an embodiment of this application;
FIG. 4 is a schematic flowchart of another communication method according to an embodiment of this application;
FIG. 5 is a schematic flowchart of another communication method according to an embodiment of this application;
FIG. 6 is a schematic flowchart of another communication method according to an embodiment of this application;
FIG. 7 is a schematic flowchart of another communication method according to an embodiment of this application;
FIG. 8 is a schematic flowchart of another communication method according to an embodiment of this application;
FIG. 9 is a schematic flowchart of another communication method according to an embodiment of this application;
FIG. 10 is a schematic flowchart of another communication method according to an embodiment of this application;
FIG. 11 is a diagram of a relative positional relationship between second data and first data when both a geometry type of the first data and a geometry type of the second data are planes according to an embodiment of this application;
FIG. 12 is a diagram of a relative positional relationship between second data and first data when both a geometry type of the first data and a geometry type of the second data are spheres according to an embodiment of this application;
FIG. 13 is a diagram of a relative positional relationship between second data and first data when both a geometry type of the first data and a geometry type of the second data are voxels according to an embodiment of this application;
FIG. 14 is a diagram of a relative positional relationship between second data and first data when a geometry type of the first data is a cube and a geometry type of the second data is a plane according to an embodiment of this application;
FIG. 15 is a diagram of a relative positional relationship between second data and first data when a geometry type of the first data is a cube and a geometry type of the second data is a point according to an embodiment of this application;
FIG. 16 is a diagram of a relative positional relationship between second data and first data when a geometry type of the first data is a cylinder and a geometry type of the second data is a curved surface according to an embodiment of this application;
FIG. 17 is a diagram of a relative positional relationship between second data and first data when a geometry type of the first data is a sphere and a geometry type of the second data is a voxel according to an embodiment of this application;
FIG. 18 is a block diagram of a communication apparatus according to an embodiment of this application;
FIG. 19 is a diagram of another communication apparatus according to an embodiment of this application; and
FIG. 20 is a diagram of a chip system according to an embodiment of this application.

### DESCRIPTION OF EMBODIMENTS

For ease of understanding embodiments of this application, the following descriptions are first provided.

First, in this application, "indicate" may include a direct indication and an indirect indication. When indication information is described as indicating A, the description may include that the indication information directly indicates A or indirectly indicates A, but does not mean that the indication information necessarily carries A.

Information indicated by indication information is referred to as to-be-indicated information. During specific implementation, the to-be-indicated information may be indicated in a plurality of manners, for example, but not limited to, the following manners: The to-be-indicated information may be directly indicated. For example, the to-be-indicated information or an index of the to-be-indicated information is indicated. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed upon. For example, specific information may alternatively be indicated by an information arrangement sequence that is pre-agreed upon (for example, stipulated in a protocol), to reduce indication overheads to some extent. In addition, a common part of information may alternatively be identified and indicated in a unified manner, to reduce indication overheads caused by separately indicating same information.

Second, in this application, "at least one" means one or more, and "a plurality of" means two or more. In addition, in embodiments of this application, "first", "second", and various numbers (for example, "#1" and "#2") are merely intended for distinguishing for ease of description, but not to limit the scope of embodiments of this application. Sequence numbers of the following processes do not mean an execution sequence. An execution sequence of the processes should be determined based on functions and internal logic of the processes, and should not constitute any limitation on implementation processes of embodiments of this application. It should be understood that objects described in this way are interchangeable in an appropriate circumstance, so that a solution other than embodiments of this application can be described. In addition, in embodiments of this application, the term "S501" and the like are merely identifiers for ease of description, and are not intended to limit a sequence of performing steps.

Third, in embodiments of this application, the term "in an example", "for example", or the like is used to give an example, an illustration, or a description. Any embodiment or design scheme described with "in an example" or "for example" in this application should not be construed as being more preferred or advantageous than another embodiment or design scheme. To be precise, the term "in an example", "for example", or the like is intended to present a related concept in a specific manner.

Fourth, "stored" in embodiments of this application may mean being stored in one or more memories. The one or more memories may be separately disposed, or may be integrated into an encoder, a decoder, a processor, or a communication apparatus. Alternatively, a part of the one or more memories may be separately disposed, and a part of the one or more memories may be integrated into a decoder, a processor, or a communication apparatus. A type of the memory may be a storage medium in any form. This is not limited in this application.

Fifth, in embodiments of this application, a "protocol" may be a standard protocol in the communication field, for example, may include an NR protocol and a related protocol applied to a future communication system. This is not limited in this application.

Sixth, in embodiments of this application, "of (of)", "corresponding (corresponding, relevant)", "corresponding (corresponding)", and "associate (associate)" may sometimes be used interchangeably. It should be noted that meanings expressed by the terms are consistent when a difference between the terms is not emphasized.

Seventh, in embodiments of this application, "in a case in which", "when", and "if" may sometimes be used interchangeably. It should be noted that meanings expressed by the terms are consistent when a difference between the terms is not emphasized.

Eighth, the term "and/or" in this specification describes only an association relationship between associated objects, and indicates that three relationships may exist. For example, A and/or B may indicate the following three cases: Only A exists, both A and B exist, and only B exists. In addition, the character "/" in this specification usually indicates an "or" relationship between the associated objects.

The following describes the technical solutions of this application with reference to the accompanying drawings.

The technical solutions provided in embodiments of this application are applicable to a wireless local area network (wireless local area network, WLAN) scenario, for example, support related institute of electrical and electronics engineers (institute of electrical and electronics engineers, IEEE) 802.11 standards, such as the 802.11a/b/g standard, the 802.11n standard, the 802.11ac standard, the 802.11ax standard, and a next-generation Wi-Fi protocol of IEEE 802.11ax, for example, 802.11be, Wi-Fi 7, extremely high throughput (extremely high throughput, EHT), 802.11ad, 802.11ay, or 802.11bf, or for another example, a next generation of 802.11be, like Wi-Fi 8; may be further applied to an ultra-wideband (ultra-wideband, UWB)-based wireless personal area network system, for example, 802.15 series standards; and may be further applied to a sensing (sensing) system, for example, 802.11bf series standards. The 802.11n standard is referred to as high throughput (high throughput, HT), the 802.11ac standard is referred to as a very high throughput (very high throughput, VHT) standard, the 802.11ax standard is referred to as a high efficiency (high efficiency, HE) standard, and the 802.11be standard is referred to as an extremely high throughput (extremely high throughput, EHT) standard. 802.11bf includes two major categories of standards: a low-frequency (for example, sub-7 GHz) standard and a high-frequency (for example, 60 GHz) standard. An implementation of sub-7 GHz mainly depends on 802.11ac, 802.11ax, 802.11be, and a next-generation standard. An implementation of 60 GHz mainly depends on 802.11ad, 802.11ay, and a next-generation standard. 802.11ad may also be referred to as a directional multi-gigabit (directional multi-gigabit, DMG) standard, and 802.11ay may also be referred to as an enhanced directional multi-gigabit (enhanced directional multi-gigabit, EDMG) standard.

In embodiments of this application, an example in which a WLAN network, especially a network to which an IEEE 802.11 system standard is applied, is deployed is used for description. However, it is easily understood by a person skilled in the art that various aspects in embodiments of this application may be extended to other networks that use various standards or protocols, for example, a high performance radio local area network (high performance radio local area network, HIPERLAN), a wireless wide area network (wireless wide area network, WWAN), a wireless personal area network (wireless personal area network, WPAN), or other networks that are known or to be developed in the future. Therefore, regardless of a used coverage area and a used wireless access protocol, various aspects provided in embodiments of this application are applicable to any suitable wireless network.

The technical solutions in embodiments of this application may be further applied to various communication systems, for example, a WLAN communication system, a wireless fidelity (wireless fidelity, Wi-Fi) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, a 6th generation (6th generation, 6G) system, an internet of things (internet of things, IoT) network, D2D communication (device-to-device communication), or vehicle-to-everything (vehicle-to-x, V2X). The D2D communication is a communication mode in which two peer user nodes directly communicate with each other.

The technical solutions in embodiments of this application are applicable to data fusion scenarios such as multi-device sensing, imaging, and environment reconstruction.

The foregoing communication systems to which this application is applicable are merely examples for description, and communication systems to which this application is applicable are not limited thereto. This is uniformly described herein, and details are not described below again.

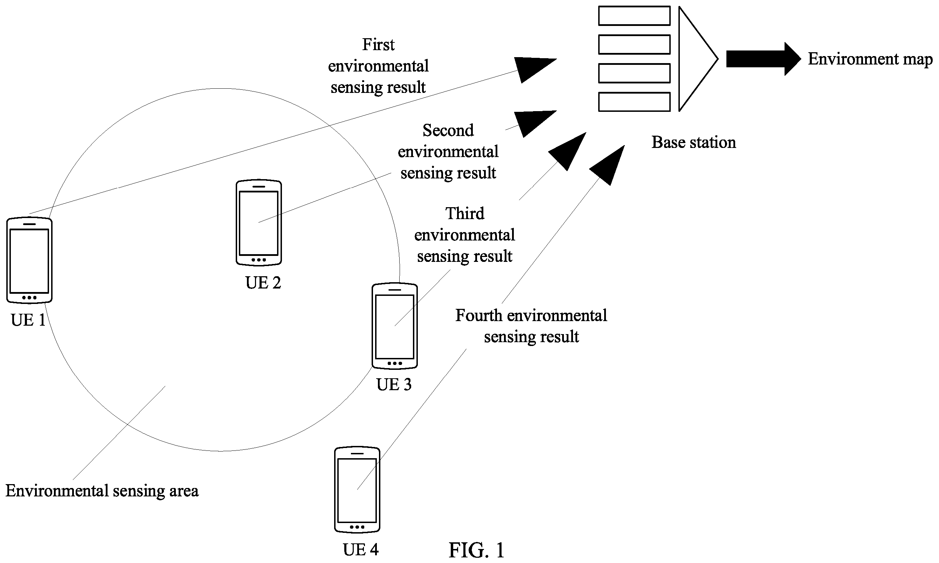

FIG. 1 is a diagram of an application scenario to which an embodiment of this application is applicable. As shown in FIG. 1, a communication method provided in this application is applicable to a scenario of data fusion, for example, sensing, imaging, or environment reconstruction, between a plurality of devices. The environment reconstruction scenario is used as an example. A plurality of user equipments (a UE 1, a UE 2, a UE 3, and a UE 4) sense an environmental sensing area from different angles of view, and separately send obtained environmental sensing results to a base station. The UE 1 obtains a first environmental sensing result by sensing the environmental sensing area, and sends the first environmental sensing result to the base station. The UE 2 obtains a second environmental sensing result by sensing the environmental sensing area, and sends the second environmental sensing result to the base station. The UE 3 obtains a third environmental sensing result by sensing the environmental sensing area, and sends the third environmental sensing result to the base station. The UE 4 obtains a fourth environmental sensing result by sensing the environmental sensing area, and sends the fourth environmental sensing result to the base station. After receiving the environmental sensing results sent by the plurality of user equipments, the base station fuses the received first environmental sensing result, second environmental sensing result, third environmental sensing result, and fourth environmental sensing result to obtain an environment map.

It should be understood that the embodiment shown in FIG. 1 is merely an example for description of a scenario to which this application is applicable. For example, a fusion operation on environmental sensing results may alternatively be performed by any one of the UE 1, the UE 2, the UE 3, and the UE 4.

Currently, during multi-device data fusion, a terminal device or a base station directly compresses all newly collected data and then sends compressed data to a peer device. However, not all of sensed data is helpful for a fusion result. Because a correlation between the newly collected data and current existing data of the peer device is not considered, redundant information is not fully removed, leading to a waste of transmission resources and low efficiency of data transmission.

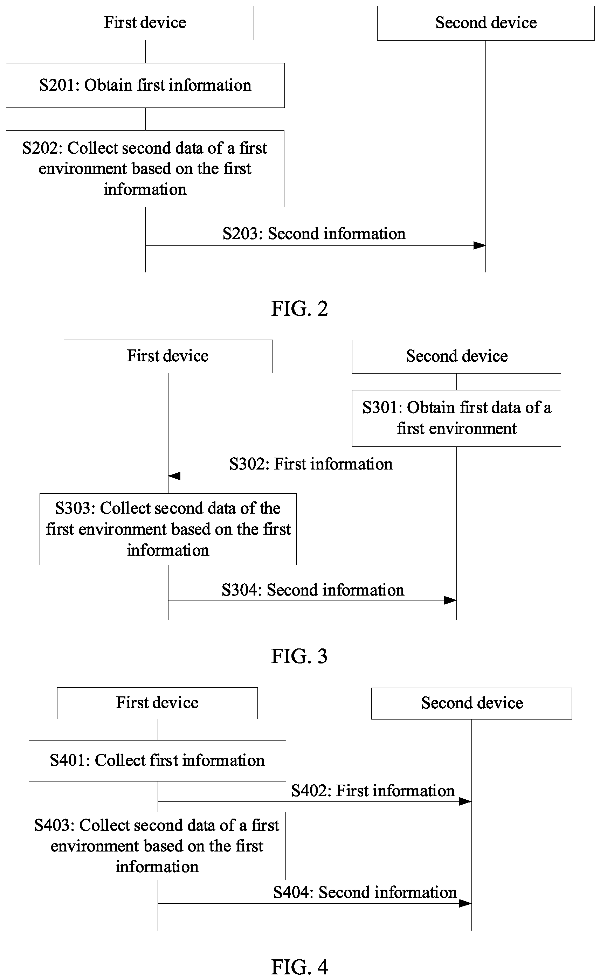

For example, FIG. 2 is a schematic flowchart of a communication method 200 according to an embodiment of this application. As shown in FIG. 2, the method 200 includes the following steps.

S201: A first device obtains first information.

In some embodiments, that the first device obtains the first information may be that the first device receives the first information sent by a second device. In this case, the first information includes one or more of a geometry type of first data of a first environment, attribute information of the first data, and position information of the first data. In addition, the first information may further include resolution information of the first data and/or a first environment map corresponding to the first data.

In some other embodiments, that the first device obtains the first information may alternatively be that the first device collects the first information. In this case, the first information includes first data of a first environment.

For example, the first environment may be a service area of the first device, or may be a network coverage area of the first device.

The first data of the first environment may be understood as initial data of the first environment. The first device may obtain, based on the first data of the first environment through data fusion, a preliminary environment map corresponding to the first environment (that is, the first environment map corresponding to the first data).

Optionally, the geometry type of the first data may include one or more of the following geometry types: a point, a line, a surface, a voxel, a sphere, a polyhedron (for example, a cube or a cylinder), an octree, and the like.

Optionally, the attribute information of the first data may include one or more of the following information: texture pixel density, a color, magnetic permeability, a dielectric constant, a scattering coefficient, a material, mass, and the like.

Optionally, the position information of the first data may include coordinate information of the first data. For example, when the geometry type of the first data is the point, the position information of the first data may be point coordinates. For another example, when the geometry type of the first data is the plane, the position information of the first data may include coordinate information of a feature point on the plane, or may include spatial position information of the plane. For another example, when the geometry type of the first data is the sphere, the position information of the first data may include sphere center coordinate information of the sphere and a radius of the sphere. In addition, the position information of the first data may further include a coverage area of the first data.

S202: The first device collects second data of the first environment based on the first information, where the second data is incremental data relative to the first data of the first environment.

Optionally, for example, the first data of the first environment may be low-resolution sensing/environmental data, or may be a part of data of the first environment (for example, data of a part of hotspot coverage areas in the first environment).

Optionally, for example, the second data of the first environment may be high-resolution sensing/environmental data, or may be a part of data, different from the first data, of the first environment (for example, data of a part of newly explored areas in the first environment).

S203: The first device sends second information to the second device.

The second information includes the second data of the first environment.

Optionally, the second information may further include one or more of a geometry type of the second data, attribute information of the second data, and a relative positional relationship between the second data and the first data.

Optionally, the geometry type of the second data may include one or more of the following geometry types: a point, a line, a surface, a voxel, a sphere, a polyhedron (for example, a cube or a cylinder), an octree, and the like.

Optionally, the attribute information of the second data may include one or more of the following information: texture pixel density, a color, magnetic permeability, a dielectric constant, a scattering coefficient, a material, mass, and the like.

Optionally, the relative positional relationship between the second data and the first data may include an absolute positional relationship of the second data relative to the first data, or may include a relative positional relationship of the second data relative to the first data. The absolute positional relationship of the second data relative to the first data may include an indication of a position of the second data in a coordinate system in which the first data is located. The relative positional relationship of the second data relative to the first data may include an indication of a position of the second data in a coordinate system established by using the first data as an origin. A specific indication of a position of the second data is described in detail in subsequent embodiments.

In some embodiments, the relative positional relationship between the second data and the first data may be a relative spatial relationship between the second data and the first data that is represented by a parameter, for example, coordinates or a distance.

Optionally, the second information may further include resolution information of the second data.

Optionally, the second device may be understood as a part of devices in the first environment, or may be understood as all devices in the first environment, or may be understood as a specific device in the first environment. The first device may send the second information to the second device in a broadcast, multicast, or unicast mode or the like.

The second data is incremental environment map data (for example, newly added environment map data or changed environment map data) that is based on the environment map corresponding to the first data. The geometry type of the second data may be the same as or different from the geometry type of the first data.

In some embodiments, the geometry type of the second data is the same as the geometry type of the first data, and the second information may not carry the geometry type of the second data, but carries a first identifier, where the first identifier indicates that the geometry type of the second data is the same as the geometry type of the second data.

In some embodiments, if the geometry type of the second data is different from the geometry type of the first data, the second information includes the geometry type of the second data. For example, a corresponding geometry type may be indicated by a specific type identifier. For example, an enumerated value, an index (index), or a bitmap (bitmap) may be used for identification.

The second data may include, for example, one or more of a point, a plane/patch, a cube, a sphere, a cylinder, and a voxel.

An indication manner of the second data adapts to a type of the second data. Details are as follows:
(1) When the second data is the point, a corresponding indication manner may be: Cartesian coordinates: (x, y, z); polar coordinates: (0, φ, r); cylindrical coordinates: (Ø, R, z); or the like.
(2) When the second data is the plane/patch, a corresponding indication manner may be: a polygon: {a quantity of points, coordinates or an index of each point}; a plane: ax+by+cz+d=0 {plane parameters abcd, a plane range}; or the like.
(3) When the second data is the cube, a corresponding indication manner may be {a quantity of points, coordinates or an index of each point}, {a quantity of points on a plane, coordinates or an index of each point on the plane, a height of the cube}, or the like.
(4) When the second data is the sphere, a corresponding indication manner may be {a center point, a radius}.
(5) When the second data is the cylinder, a corresponding indication manner may be {a center point, (a direction), a radius, a height}.
(6) When the second data is the voxel, a corresponding indication manner may be {a start point, a box (box) size, a voxel size, information indicating whether a voxel is empty}, {a start point, a quantity of voxels in each direction, a voxel size, information indicating whether a voxel is empty}, or the like.

Optionally, after receiving the second information, the second device further updates a map of the first environment based on the second information, to perform a task based on an updated map of the first environment.

In an implementation, the first device is a base station, and the second device is a terminal device.

In another implementation, the first device is a terminal device, and the second device is a base station.

In this embodiment of this application, during multi-device data fusion, after collecting new data, a device does not need to send all sensed data to a peer device, but sends incremental data (new data or updated data), relative to existing data, of all the sensed data. In the method, because a part of data that overlaps existing data of a target device does not need to be sent to the target device, transmission overheads of the device can be reduced, to improve efficiency of data transmission and utilization of transmission resources.

For example, FIG. 3 is a schematic flowchart of another communication method 300 according to an embodiment of this application. As shown in FIG. 3, the method 300 includes the following steps.

S301: A second device obtains first data of a first environment.

For example, the first environment may be a service area of a first device, or may be a network coverage area of a first device.

In an implementation, a manner of obtaining, by the first device, the first data of the first environment is as follows: The first device collects the first data of the first environment.

In another implementation, a manner of obtaining, by the first device, the first data of the first environment is as follows: The first device receives the first data of the first environment that is sent by a third device located in the first environment, where the third device is different from the first device.

S302: The second device sends first information to the first device. This may alternatively be described as that the first device receives the first information sent by the second device.

The first information is used for the first device to collect second data of the first environment. The second data of the first environment is incremental data relative to the first data of the first environment. The first information includes one or more of a geometry type of the first data, attribute information of the first data, and position information of the first data.

The geometry type of the first data, the attribute information of the first data, and the position information of the first data are described in detail in the embodiment shown in FIG. 2. For brevity, details are not described herein again.

Optionally, the first information may further include resolution information of the first data and/or a first environment map corresponding to the first data.

Optionally, the second device may send the first information to the first device in a broadcast, multicast, or unicast mode or the like.

In an implementation, when the first device sends the first information in the broadcast or multicast mode, the first information may carry identification information of the first device. After receiving the first information, a device performs identity matching, and responds to the first information after the identity matching succeeds.

In another implementation, when the second device sends the first information in the broadcast or multicast mode, after receiving the first information, a device within a range performs position matching based on the position information of the first data in the first information, and responds to the first information after the position matching succeeds.

Optionally, for example, the first data of the first environment may be low-resolution sensing/environmental data, or may be a part of data of the first environment (for example, data of a part of hotspot coverage areas in the first environment).

Optionally, for example, the second data of the first environment may be high-resolution sensing/environmental data, or may be a part of data, different from the first data, of the first environment (for example, data of a part of newly explored areas in the first environment).

S303: The first device collects the second data of the first environment based on the first information.

S304: The first device sends second information to the second device.

Descriptions of this step are the same as the descriptions of S203 in the embodiment shown in FIG. 2. For brevity, details are not described herein again.

In an implementation, the first device is a base station, and the second device is a terminal device.

In another implementation, the first device is a terminal device, and the second device is a base station.

In this embodiment of this application, during multi-device data fusion, after collecting new data, a device does not send all sensed data to a target device, but sends incremental data (new data or updated data), relative to existing data of the target device, of all the sensed data, and sends a geometry type and position information of the incremental data. In this way, after receiving the incremental data, the target device can perform data fusion based on the existing data. In the method, because a part of data that overlaps existing data of a target device does not need to be sent to the target device, transmission overheads of the device can be reduced, to improve efficiency of data transmission and utilization of transmission resources.

For example, FIG. 4 is a schematic flowchart of another communication method 400 according to an embodiment of this application. As shown in FIG. 4, the method 400 includes the following steps.

S401: A first device collects first information, where the first information includes first data of a first environment.

The first data of the first environment is described in detail in the embodiments shown in FIG. 2 and FIG. 3. For brevity, details are not described herein again.

S402: The first device sends the first information to a second device.

Specifically, the first device sends the first data of the first environment to the second device.

S403: The first device collects second data of the first environment based on the first information.

Optionally, for example, the first data of the first environment may be low-resolution sensing/environmental data, or may be a part of data of the first environment (for example, data of a part of hotspot coverage areas in the first environment).

Optionally, for example, the second data of the first environment may be high-resolution sensing/environmental data, or may be a part of data, different from the first data, of the first environment (for example, data of a part of newly explored areas in the first environment).

S404: The first device sends second information to the second device.

Descriptions of this step are the same as the descriptions of S203 in the embodiment shown in FIG. 2. For brevity, details are not described herein again.

In an implementation, the first device is a base station, and the second device is a terminal device.

In another implementation, the first device is a terminal device, and the second device is a base station.

In this embodiment of this application, during multi-device data fusion, after collecting new data, a device does not need to send all sensed data to a peer device, but sends incremental data (new data or updated data), relative to existing data, of all the sensed data, and sends a geometry type and position information of the incremental data. In the method, because a part of data that overlaps existing data of a target device does not need to be sent to the target device, transmission overheads of the device can be reduced, to improve efficiency of data transmission and utilization of transmission resources.

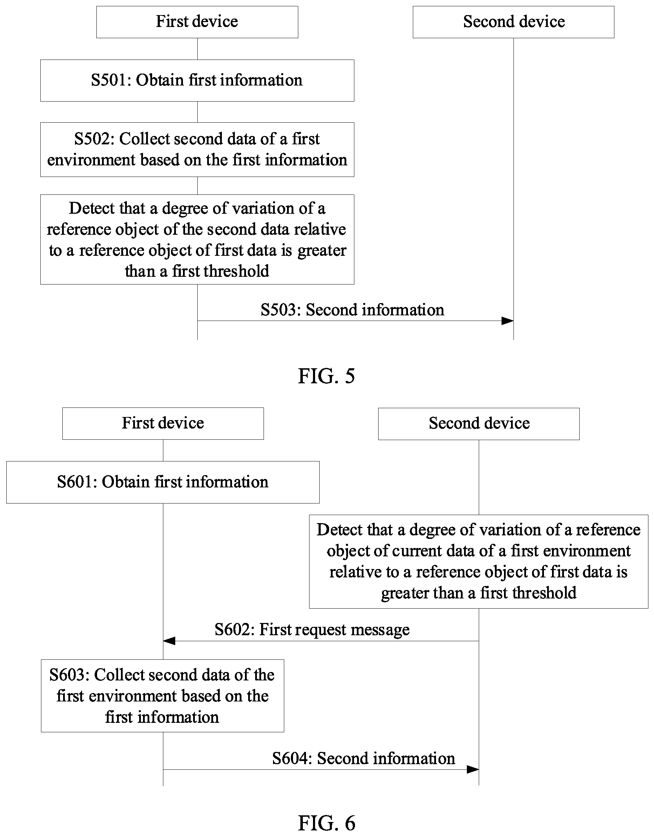

For example, FIG. 5 is a schematic flowchart of another communication method 500 according to an embodiment of this application. As shown in FIG. 5, the method 500 includes the following steps.

S501 and S502 are the same as S201 and S202 in the embodiment shown in FIG. 2. For brevity, details are not described herein again.

S503: The first device sends second information to the second device when the first device detects that a degree of variation of a reference object of the second data relative to a reference object of the first data is greater than a first threshold.

Optionally, the reference object may be a reference point, and/or the reference object may be a normal vector. In addition, the reference object may alternatively be another object that may be used to measure a change in environmental data.

In some embodiments, when the reference object is the reference point, the degree of variation of the reference object of the second data is a value of a distance between a reference point of the first data and a reference point of the second data. The reference point may be understood as a feature point in the environmental data. For example, when a type of the environmental data is a cube, the reference point may be a vertex of the cube, and the degree of variation of the reference object of the second data is a distance between a vertex corresponding to the first data and a vertex corresponding to the second data. For example, when a type of the environmental data is a triangular plane, the reference point may be a center point of the triangular plane, and the degree of variation of the reference object of the second data is a distance between a center point corresponding to the first data and a center point corresponding to the second data.

In some other embodiments, when the reference object is the normal vector, the degree of variation of the reference object of the second data is an included angle between a normal vector of the first data and a normal vector of the second data. For example, when a type of the environmental data is a triangular plane, the reference point may be a normal vector of the triangular plane, and the degree of variation of the reference object of the second data is a value of a distance between a normal vector corresponding to the first data and a normal vector corresponding to the second data.

Optionally, the reference object may alternatively be an environment reconstruction performance indicator of the first environment, for example, current data resolution and environment reconstruction precision information corresponding to the first environment or a first area in the first environment. The environment reconstruction precision information may include, for example, a chamfer distance and accuracy of a sensing task. The sensing task may be positioning, beam tracking, interruption/blocking prediction, or the like. Correspondingly, different reference objects correspond to different first thresholds.

That a degree of variation of the environmental data is greater than the first threshold may be, for example, that a degree of variation of environmental data of the first area in the first environment is greater than the first threshold.

In an implementation, the first device is a base station, and the second device is a terminal device.

In another implementation, the first device is a terminal device, and the second device is a base station.

In some implementations, the "degree of variation" may be replaced with a "range of variation".

In this embodiment of this application, during multi-device data fusion, a device for collecting incremental data sends corresponding incremental data to a peer device only when detecting that a degree of variation of environmental data reaches a degree at which a map needs to be updated. This can further reduce transmission overheads of the device, to improve utilization of transmission resources.

For example, FIG. 6 is a schematic flowchart of another communication method 600 according to an embodiment of this application. As shown in FIG. 6, the method 600 includes the following steps.

S601 is the same as S201 in the embodiment shown in FIG. 2. For brevity, details are not described herein again.

S602: A second device sends a first request message to the first device when the second device detects that a degree of variation of a reference object of current data of the first environment relative to a reference object of the first data is greater than a first threshold, where the first request message is used to obtain second information.

The reference object is described in detail in S503 in the embodiment shown in FIG. 5. For brevity, details are not described herein again.

Optionally, the reference object may alternatively be an environment reconstruction performance indicator of the first environment, for example, current data resolution and environment reconstruction precision information corresponding to the first environment or a first area in the first environment. The environment reconstruction precision information may include, for example, a chamfer distance and accuracy of a sensing task. The sensing task may be positioning, beam tracking, interruption/blocking prediction, or the like. Correspondingly, different reference objects correspond to different first thresholds.

S603: In response to receiving the first request message, the first device collects second data of the first environment.

Descriptions of this step are similar to the descriptions of S202 in the embodiment shown in FIG. 2. For brevity, details are not described herein again.

S604: The first device sends the second information to the second device.

Descriptions of this step are the same as the descriptions of S203 in the embodiment shown in FIG. 2. For brevity, details are not described herein again.

In an implementation, the first device is a base station, and the second device is a terminal device.

In another implementation, the first device is a terminal device, and the second device is a base station.

It should be understood that an execution sequence of steps S602 and S603 is not limited. The first device may collect and send the second data after receiving a request message sent by the second device, or the first device may periodically collect the second data after obtaining the first information, and send the second data to the second device when receiving a request message sent by the second device.

In this embodiment of this application, during multi-device data fusion, a device sends incremental data to another device only when receiving a request message that is sent by the another device and that is used to obtain the incremental data. This can avoid frequent unnecessary data transmission between devices, to further reduce transmission overheads of the device, and improve utilization of transmission resources.

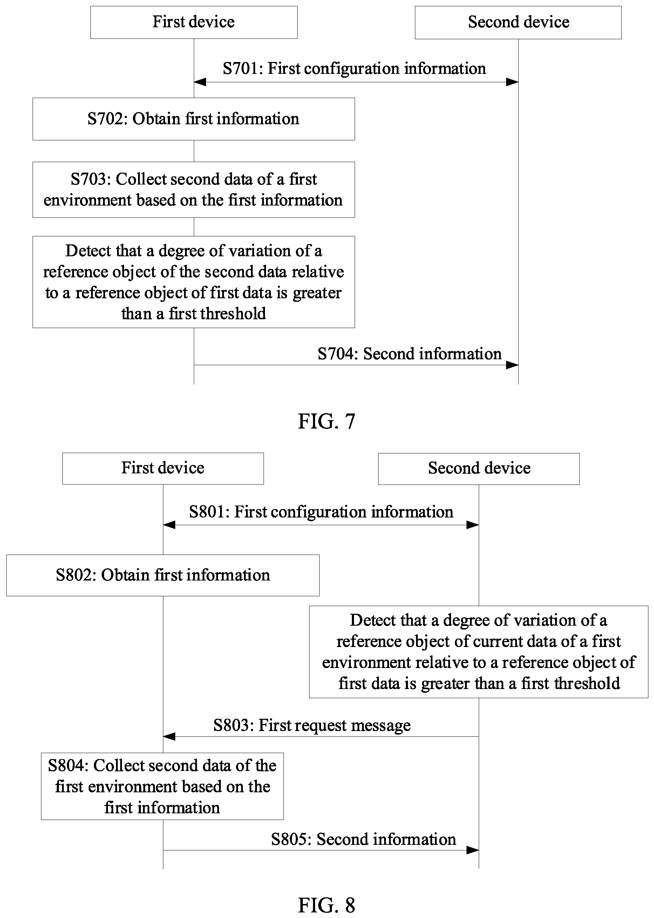

For example, based on the embodiment shown in FIG. 5, FIG. 7 is a schematic flowchart of another communication method 700 according to an embodiment of this application. As shown in FIG. 7, the method 700 includes the following steps.

S701: A first device receives first configuration information sent by a second device, or a first device and a second device agree upon first configuration information, where the first configuration information is used to configure a reference object and a first threshold.

It can be understood that the first configuration information may be configuration information agreed upon by both the first device and the second device, or may be determined by the second device and then indicated to the first device, or may be determined by the first device and then indicated to the second device. This is not limited in this application.

In an example, the first threshold may be configured by the first device and the second device through radio resource control (radio resource control, RRC), media access control (media access control, MAC), a physical downlink control channel (physical downlink control channel, PDCCH), or the like.

In some embodiments, the first device and the second device send the first configuration information to each other in a broadcast, multicast, or unicast mode or the like.

S702 to S704 are the same as S501 to S503 in the embodiment shown in FIG. 5. For brevity, details are not described herein again.

In an example, the first configuration information is used to configure the reference object and the first threshold to be a reference point (for example, a vertex of a polyhedron, a center point of a polyhedron, or a center point of a plane) and a first distance threshold respectively. When a distance between a reference point of the second data and a reference point of the first data is greater than the first distance threshold, the first device sends the second information to the second device.

In some other embodiments, the first configuration information is used to configure the reference object and the first threshold to be a normal vector and a first angle threshold respectively. When an included angle formed by a normal vector of the second data and a normal vector of the first data is greater than the first angle threshold, the first device sends the second information to the second device.

In an implementation, the first device is a base station, and the second device is a terminal device.

In another implementation, the first device is a terminal device, and the second device is a base station.

In this embodiment of this application, a condition for triggering transmission may be preconfigured between a plurality of devices. In this way, a device sends or requests to obtain incremental data only when detecting that a degree of variation of current environmental data reaches a degree at which an environment map needs to be updated, to further reduce transmission overheads of the device and improve utilization of transmission resources.

For example, based on the embodiment shown in FIG. 6, FIG. 8 is a schematic flowchart of another communication method 800 according to an embodiment of this application. As shown in FIG. 8, the method 800 includes the following steps.

S801: A second device receives first configuration information sent by a first device, or a first device and a second device agree upon first configuration information, where the first configuration information is used to configure a reference object and a first threshold.

It can be understood that the first configuration information may be configuration information agreed upon by both the first device and the second device, or may be determined by the second device and then indicated to the first device, or may be determined by the first device and then indicated to the second device. This is not limited in this application.

In some embodiments, the first device and the second device send the first configuration information to each other in a broadcast, multicast, or unicast mode or the like.

S802 to S805 are the same as S601 to S604 in the embodiment shown in FIG. 6. For brevity, details are not described herein again.

In an example, the first configuration information is used to configure the reference object and the first threshold to be a reference point (for example, a vertex of a polyhedron, a center point of a polyhedron, or a center point of a plane) and a first distance threshold respectively. When a distance between a reference point of the second data and a reference point of the first data is greater than the first distance threshold, the first device sends the second information to the second device.

In some other embodiments, the first configuration information is used to configure the reference object and the first threshold to be a normal vector and a first angle threshold respectively. When an included angle formed by a normal vector of the second data and a normal vector of the first data is greater than the first angle threshold, the first device sends the second information to the second device.

In an implementation, the first device is a base station, and the second device is a terminal device.

In another implementation, the first device is a terminal device, and the second device is a base station.

In this embodiment of this application, a condition for triggering transmission may be preconfigured between a plurality of devices. In this way, a device sends or requests to obtain incremental data only when detecting that a degree of variation of current environmental data reaches a degree at which an environment map needs to be updated, to further reduce transmission overheads of the device and improve utilization of transmission resources.

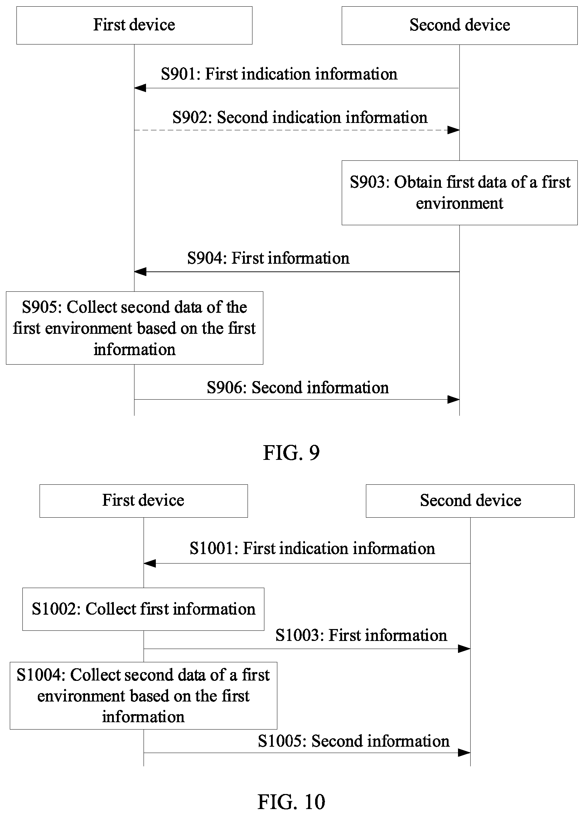

For example, FIG. 9 is a schematic flowchart of another communication method 900 according to an embodiment of this application. As shown in FIG. 9, the method 900 includes the following steps.

S901: A first device receives first indication information sent by a second device, where the first indication information indicates one or more of a geometry type supported by the second device, attribute information supported by the second device, and a position information indication manner supported by the second device.

The geometry type and the attribute information are described in detail in the embodiment shown in FIG. 2. For brevity, details are not described herein again.

In some embodiments, the second device sends the first indication information to the first device in a broadcast, multicast, or unicast mode or the like.

Optionally, the position information indication manner supported by the second device includes: indicating a relative spatial relationship between the second data and the first data by using a parameter, for example, a distance, coordinates, or a direction and an angle.

Optionally, the method 900 may further include step S902: The first device sends second indication information to the second device, where the second indication information indicates one or more of a geometry type supported by the first device, attribute information supported by the first device, and a position information indication manner supported by the first device. In this way, the second device can send first information to the first device based on the second indication information.

S903 to S906 are the same as S301 to S304 in the embodiment shown in FIG. 3. For brevity, details are not described herein again.

In an implementation, the first device is a base station, and the second device is a terminal device.

In another implementation, the first device is a terminal device, and the second device is a base station.

In this embodiment of this application, each of a plurality of devices may pre-notify another device of capability information of the device. In this way, when sending a related message to the device, the another device can send a message of a type supported by the device, to further improve utilization of transmission resources.

For example, FIG. 10 is a schematic flowchart of another communication method 1000 according to an embodiment of this application. As shown in FIG. 10, the method 1000 includes the following steps.

S1001: A first device receives first indication information sent by a second device, where the first indication information indicates one or more of a geometry type supported by the second device, attribute information supported by the second device, and a position information indication manner supported by the second device.

The geometry type and the attribute information are described in detail in the embodiment shown in FIG. 2. For brevity, details are not described herein again.

In some embodiments, the second device sends the first indication information to the first device in a broadcast, multicast, or unicast mode or the like.

Optionally, the position information indication manner supported by the second device includes: indicating a relative spatial relationship between the second data and the first data by using a parameter, for example, a distance, coordinates, or a direction and an angle.

S1002 to S1005 are the same as S401 to S404 in the embodiment shown in FIG. 4. For brevity, details are not described herein again.

In an implementation, the first device is a base station, and the second device is a terminal device.

In another implementation, the first device is a terminal device, and the second device is a base station.

In this embodiment of this application, each of a plurality of devices may pre-notify another device of capability information of the device. In this way, when sending a related message to the device, the another device can send a message of a type supported by the device, to further improve utilization of transmission resources.

It should be understood that the foregoing embodiments may be separately implemented, or may be implemented in combination.

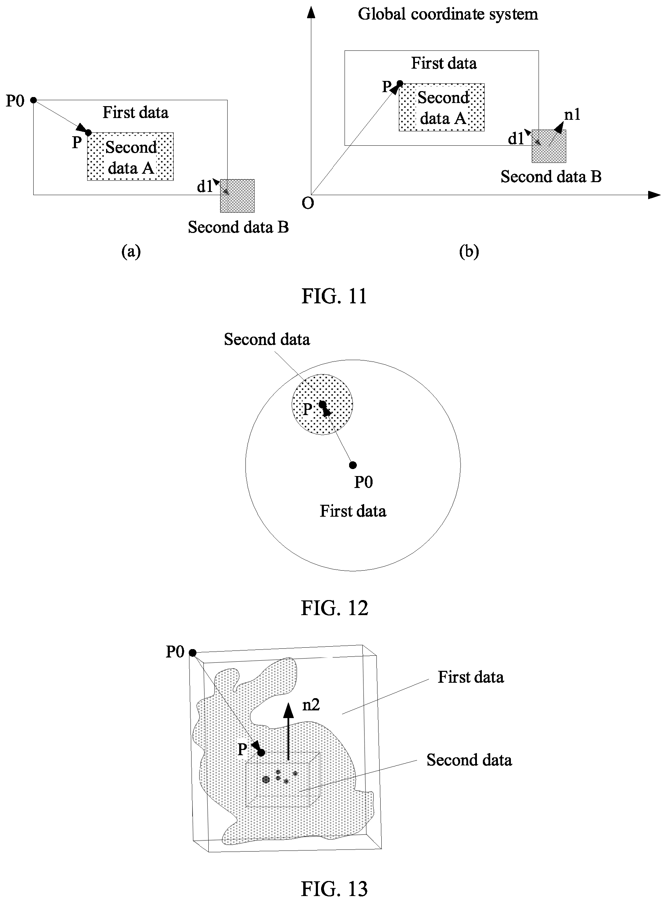

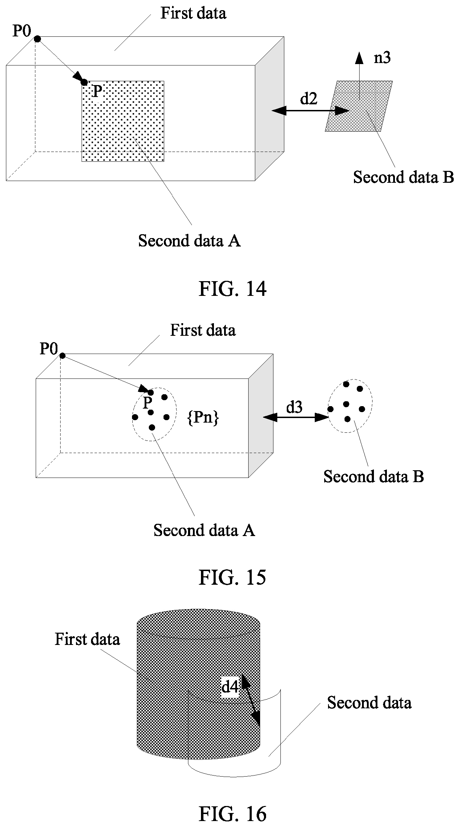

For clearer understanding of the first data, the second data, and the relative positional relationship between the second data and the first data in embodiments of this application, the following describes the first data, the second data, and the relative positional relationship between the second data and the first data in embodiments of this application by using examples with reference to FIG. 11 to FIG. 17. FIG. 11 to FIG. 13 are diagrams of a relative positional relationship between second data and first data when a geometry type of the first data and a geometry type of the second data are the same. FIG. 14 to FIG. 17 are diagrams of a relative positional relationship between second data and first data when a geometry type of the first data and a geometry type of the second data are different.

FIG. 11 is a diagram of a relative positional relationship between second data and first data when both a geometry type of the first data and a geometry type of the second data are planes according to an embodiment of this application.

As shown in FIG. 11, both the geometry type of the first data and the geometry type of the second data are planes (in other words, both the first data and the second data are plane data), and position information of the second data may be indicated by using relative coordinates or absolute coordinates.

(a) in FIG. 11 is a diagram of indicating position information of second data by using relative coordinates. As shown in (a) in FIG. 11, a relative positional relationship of second data A relative to the first data may be represented by a vector *̅P̅*̅₀̅*̅P̅*̅, where P₀ is a reference object of the first data, for example, may be a data anchor in an upper-left corner of a plane corresponding to the first data, and P is a reference object of the second data A, for example, may be a data anchor in an upper-left corner of a plane corresponding to the second data A. A spatial positional relationship of second data B relative to the first data may be represented by a distance d1 between planes.

In some embodiments, position information of the second data A further includes a size the plane corresponding to the second data A, or the like.

In some embodiments, position information of the second data B further includes a size of a plane corresponding to the second data B, or the like.

(b) in FIG. 11 is a diagram of indicating position information of second data by using absolute coordinates. As shown in (b) in FIG. 11, an absolute position of second data A in a global coordinate system may be represented by a vector OP, where O is an origin of coordinates in the global coordinate system, and P is a reference object of the second data A, for example, may be a data anchor in an upper-left corner of a plane corresponding to the second data A. A spatial positional relationship of second data B relative to the first data may be represented by a distance d1 between planes and a normal vector *̅n̅*̅₁̅.

In some embodiments, position information of the second data A further includes a size the plane corresponding to the second data A, or the like.

In some embodiments, position information of the second data B further includes a size of a plane corresponding to the second data B, or the like.

FIG. 12 is a diagram of a relative positional relationship between second data and first data when both a geometry type of the first data and a geometry type of the second data are spheres according to an embodiment of this application.

As shown in FIG. 12, both the geometry type of the first data and the geometry type of the second data are spheres (in other words, both the first data and the second data are sphere data). A relative positional relationship of the second data relative to the first data may be represented by a vector *̅P̅*̅₀̅*̅P̅*̅, where P₀ is a reference object of the first data, for example, may be a data anchor at a center of a sphere corresponding to the first data, and P is a reference object of the second data, for example, may be a data anchor at a center of a sphere corresponding to the second data.

Optionally, position information of the second data may alternatively be indicated by using absolute coordinates. A specific indication manner is similar to the manner shown in (b) in FIG. 11. For brevity, details are not described herein again.

Optionally, position information of the second data may alternatively be indicated by using a distance between a sphere center P₀ corresponding to the first data and a sphere center P corresponding to the second data, azimuths of P₀ and P, and the like.

FIG. 13 is a diagram of a relative positional relationship between second data and first data when both a geometry type of the first data and a geometry type of the second data are voxels according to an embodiment of this application.

As shown in FIG. 13, both the geometry type of the first data and the geometry type of the second data are voxels (in other words, both the first data and the second data are voxels). A relative positional relationship of the second data relative to the first data may be represented by a vector *̅P̅*̅₀̅*̅P̅*̅, where P₀ is a reference object of the first data, for example, may be a data anchor at a vertex in an upper-left corner of a voxel corresponding to the first data, and P is a reference object of the second data, for example, may be a data anchor at a vertex in an upper-left corner of a voxel corresponding to the second data. A spatial positional relationship of the second data relative to the first data may be represented by a normal vector *̅n̅*̅₂̅.

Optionally, a box (box) size, a voxel value, and other information may be further indicated in the foregoing indication manners.

Optionally, position information of the second data may alternatively be indicated by using absolute coordinates. A specific indication manner is similar to the manner shown in (b) in FIG. 11. For brevity, details are not described herein again.

FIG. 14 is a diagram of a relative positional relationship between second data and first data when a geometry type of the first data is a cube and a geometry type of the second data is a plane according to an embodiment of this application.

As shown in FIG. 14, the geometry type of the first data is the cube and a geometry type of second data A is a plane. A relative positional relationship of the second data A relative to the first data may be represented by using a vector *̅P̅*̅₀̅*̅P̅*̅, where P₀ is a reference object of the first data, for example, may be a data anchor at a vertex in an upper-left corner of the cube corresponding to the first data, and P is a reference object of the second data A, for example, may be a data anchor at a vertex in an upper-left corner of the plane corresponding to the second data A. A relative positional relationship of second data B relative to the first data may be represented by a normal vector *̅n̅*̅₃̅ and a distance d2 between a plane of the first data and a plane corresponding to the second data.

In some embodiments, position information of the second data A further includes a size the plane corresponding to the second data A, or the like.

In some embodiments, position information of the second data B further includes a size of the plane corresponding to the second data B, or the like.

Optionally, position information of the second data may alternatively be indicated by using absolute coordinates. A specific indication manner is similar to the manner shown in (b) in FIG. 11. For brevity, details are not described herein again.

FIG. 15 is a diagram of a relative positional relationship between second data and first data when a geometry type of the first data is a cube and a geometry type of the second data is a point according to an embodiment of this application.

As shown in FIG. 15, the geometry type of the first data is the cube and a geometry type of second data A is a point. A relative positional relationship of the second data A relative to the first data may be represented by using a vector *̅P̅*̅₀̅*̅P̅*̅, where P₀ is a reference object of the first data, for example, may be a data anchor at a vertex in an upper-left corner of the cube corresponding to the first data, and P is a reference object of the second data A, for example, may be any data anchor among a plurality of pieces of point data {Pn} corresponding to the second data A. A relative positional relationship of second data B relative to the first data may be represented by a distance d3 between a plane of the first data and each of a plurality of points corresponding to the second data B.

Similarly, a position of each of a plurality of points corresponding to the second data may be indicated in the foregoing manner.

Optionally, position information of the second data may alternatively be indicated by using absolute coordinates. A specific indication manner is similar to the manner shown in (b) in FIG. 11. For brevity, details are not described herein again.

FIG. 16 is a diagram of a relative positional relationship between second data and first data when a geometry type of the first data is a cylinder and a geometry type of the second data is a curved surface according to an embodiment of this application.

As shown in FIG. 16, the geometry type of the first data is the cylinder, and the geometry type of the second data is the curved surface. A relative positional relationship of the second data relative to the first data may be represented by a distance d4 between a curved surface envelope of the first data and a curved surface envelope corresponding to the second data, or may be represented by a normal vector and/or a coordinate point.

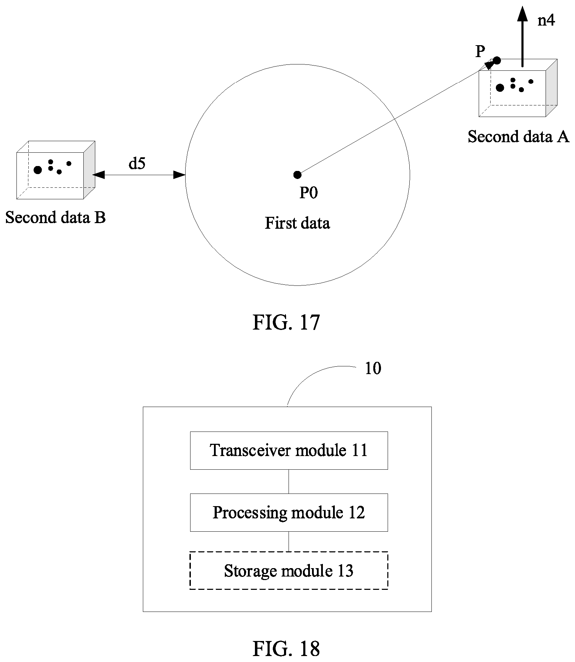

FIG. 17 is a diagram of a relative positional relationship between second data and first data when a geometry type of the first data is a sphere and a geometry type of the second data is a voxel according to an embodiment of this application.

As shown in FIG. 17, the geometry type of the first data is the sphere, and a geometry type of second data A is a voxel. A relative positional relationship of the second data A relative to the first data may be represented by a vector *̅P̅*̅₀̅*̅P̅*̅ and a normal vector *̅n̅*̅₄̅, where P₀ is a reference object of the first data, for example, may be a data anchor at a center of the sphere corresponding to the first data, and P is a reference object of the second data A, for example, may be a data anchor, corresponding to the second data A, at a vertex in an upper-left corner. A relative positional relationship of second data B relative to the first data may be represented by a distance d5 between a spherical surface of the first data and a plane corresponding to the second data.

Optionally, position information of the second data may alternatively be indicated by using absolute coordinates. A specific indication manner is similar to the manner shown in (b) in FIG. 11. For brevity, details are not described herein again.

The following describes in detail a communication apparatus provided in embodiments of this application with reference to FIG. 18 to FIG. 20. It should be understood that descriptions of apparatus embodiments correspond to the descriptions of the method embodiments. Therefore, for content that is not described in detail, refer to the foregoing method embodiments. For brevity, details of a part of content are not described herein again.

In embodiments of this application, a transmit-end device or a receive-end device may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that division into the modules in embodiments of this application is an example, and is merely logical function division. During actual implementation, another division manner may be used. An example in which each functional module is obtained through division based on a corresponding function is used below for description.

FIG. 18 is a block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing. In other words, the transceiver module 11 is configured to perform a receiving-related operation and a sending-related operation, and the processing module 12 is configured to perform an operation other than sending and receiving. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to enable the apparatus to implement actions of a device in the foregoing method embodiments.

In a first design, the apparatus 10 may correspond to the first device in the foregoing method embodiments, or may be a component (for example, a chip) of the first device.

The apparatus 10 may implement a corresponding step or process performed by the first device in the foregoing method embodiments. The transceiver module 11 may be configured to perform a sending/receiving-related operation of the first device in the foregoing method embodiments. The processing module 12 may be configured to perform a processing-related operation of the first device in the foregoing method embodiments.

In a possible implementation, the transceiver module 11 is configured to receive first information sent by a second device, where the first information includes one or more of a geometry type of first data of a first environment, attribute information of the first data, and position information of the first data. In addition, the first information may further include resolution information of the first data and/or a first environment map corresponding to the first data.

The processing module 12 is configured to collect second data of the first environment based on the first information, where the second data is incremental data relative to the first data of the first environment.

The transceiver module 11 is configured to send second information to the second device, where the second information includes the second data of the first environment.

When the apparatus 10 is configured to perform any one of the methods in FIG. 3 to FIG. 10, the transceiver module 11 may be configured to perform an information sending step in the method, for example, steps S304, S402, S404, and S503; and the processing module 12 may be configured to perform a processing step in the method, for example, step S303.

It should be understood that specific processes of performing the foregoing corresponding steps by the units are described in detail in the foregoing method embodiments. For brevity, details are not described herein again.

In another design, the apparatus 10 may correspond to the second device in the foregoing method embodiments, or may be a component (for example, a chip) of the second device.

The apparatus 10 may implement a corresponding step or process performed by the second device in the foregoing method embodiments. The transceiver module 11 may be configured to perform a sending/receiving-related operation of the second device in the foregoing method embodiments. The processing module 12 may be configured to perform a processing-related operation of the second device in the foregoing method embodiments.

It should be further understood that the apparatus 10 herein is embodied in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combined logic circuit, and/or another appropriate component that supports the described function. In an optional example, a person skilled in the art can understand that the apparatus 10 may be specifically the mobility management network element in the foregoing embodiments, and may be configured to perform the processes and/or the steps corresponding to the mobility management network element in the foregoing method embodiments; or the apparatus 10 may be specifically the terminal device in the foregoing embodiments, and may be configured to perform the processes and/or the steps corresponding to the terminal device in the foregoing method embodiments. To avoid repetition, details are not described herein again.

The apparatus 10 in the foregoing solutions has a function of implementing corresponding steps performed by the device (for example, the network device or the terminal device) in the foregoing methods. The function may be implemented by hardware, or may be implemented by hardware executing corresponding software. The hardware or the software includes one or more modules corresponding to the foregoing function. For example, the transceiver module may be replaced with a transceiver (for example, a sending unit in the transceiver module may be replaced with a transmitter, and a receiving unit in the transceiver module may be replaced with a receiver), and another unit, for example, the processing module, may be replaced with a processor, to respectively perform a sending/receiving operation and a related processing operation in the method embodiments.

In addition, the transceiver module 11 may alternatively be a transceiver circuit (which may include, for example, a receiver circuit and a transmitter circuit), and the processing module may be a processing circuit.

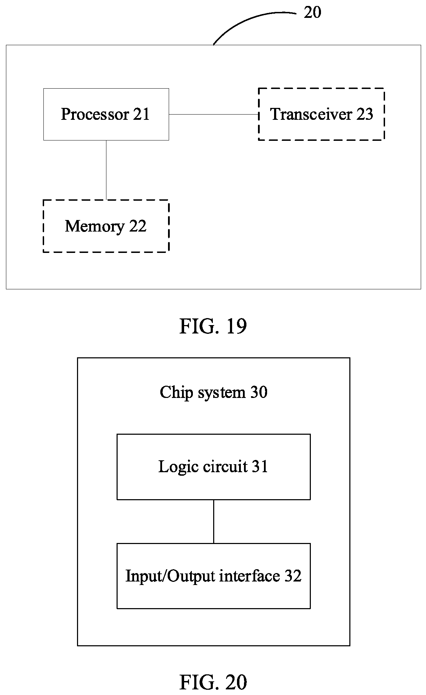

FIG. 19 is a diagram of another communication apparatus 20 according to an embodiment of this application. The apparatus 20 includes a processor 21. The processor 21 is configured to execute a computer program or instructions stored in a memory 22, or read data/signaling stored in a memory 22, to perform the methods in the foregoing method embodiments. Optionally, there is one or more processors 21.

Optionally, as shown in FIG. 19, the apparatus 20 further includes the memory 22, and the memory 22 is configured to store the computer program or the instructions and/or the data. The memory 22 and the processor 21 may be integrated together, or may be disposed separately. Optionally, there is one or more memories 22.

Optionally, as shown in FIG. 19, the apparatus 20 further includes a transceiver 23. The transceiver 23 is configured to receive a signal and/or send a signal. For example, the processor 21 is configured to control the transceiver 23 to receive a signal and/or send a signal.

In a solution, the apparatus 20 is configured to implement the operations performed by the network device or the terminal device in the foregoing method embodiments.

It should be understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example rather than limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or transistor logic device, or a discrete hardware component, a memory (storage module) may be integrated into the processor.

It should be further noted that the memory described in this specification is intended to include but is not limited to these memories and any other appropriate type of memory.

FIG. 20 is a diagram of a chip system 30 according to an embodiment of this application. The chip system 30 (which may also be referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, to enable the chip system 30 to implement the methods and the functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement the operations performed by the network device or the terminal device in the foregoing method embodiments.

For example, the logic circuit 31 is configured to implement a processing-related operation performed by the network device or the terminal device in the foregoing method embodiments, and the input/output interface 32 is configured to implement a sending-related operation and/or a receiving-related operation performed by the network device or the terminal device in the foregoing method embodiments.

An embodiment of this application further provides a computer-readable storage medium. The computer-readable storage medium stores computer instructions for implementing a method performed by a device in the foregoing method embodiments.

For example, when the computer program is executed by a computer, the computer is enabled to implement the method performed by the network device or the terminal device in the foregoing method embodiments.

An embodiment of this application further provides a computer program product, including instructions. When the instructions are executed by a computer, the method performed by the network device or the terminal device in the foregoing method embodiments is implemented.

An embodiment of this application further provides a communication system, including the foregoing network device and terminal device.

For descriptions and beneficial effects of related content of any one of the apparatuses provided above, refer to a corresponding method embodiment provided above. Details are not described herein again.

In the several embodiments provided in this application, it should be understood that the disclosed apparatuses and methods may be implemented in other manners. For example, the described apparatus embodiments are merely examples. For example, division into the units is merely logical function division. During actual implementation, another division manner may be used. For example, a plurality of units or components may be combined or integrated into another system, or some features may be ignored or not performed. In addition, the shown or discussed mutual couplings, direct couplings, or communication connections may be implemented through some interfaces. The indirect couplings or communication connections between the apparatuses or units may be implemented in an electrical form, a mechanical form, or other forms.

All or some of the foregoing embodiments may be implemented by software, hardware, firmware, or any combination thereof. When the embodiments are implemented by software, all or some of the embodiments may be implemented in a form of a computer program product. The computer program product includes one or more computer instructions. When the computer program instructions are loaded and executed on a computer, all or some of the processes or the functions according to embodiments of this application are generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk drive, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
obtaining, by a first device, first information;
collecting, by the first device, second data of a first environment based on the first information, wherein the second data is incremental data relative to first data of the first environment; and
sending, by the first device, second information to a second device, wherein the second information comprises the second data.

2. The method according to claim 1, wherein the second information further comprises one or more of a geometry type of the second data, attribute information of the second data, and a relative positional relationship between the second data and the first data.

3. The method according to claim 1 or 2, wherein obtaining, by the first device, the first information comprises:
receiving, by the first device, the first information sent by the second device, wherein the first information comprises one or more of a geometry type of the first data, attribute information of the first data, and position information of the first data.

4. The method according to claim 3, wherein the first information further comprises resolution information of the first data and/or the first environment map corresponding to the first data.

5. The method according to claim 1 or 2, wherein obtaining, by the first device, the first information comprises:
collecting, by the first device, the first information, wherein the first information comprises the first data of the first environment.

6. The method according to claim 5, wherein before sending, by the first device, the second information to the second device, the method further comprises:
sending, by the first device, the first data of the first environment to the second device.

7. The method according to any one of claims 1 to 6, wherein sending, by the first device, the second information to the second device comprises: sending, by the first device, the second information to the second device when the first device detects that a degree of variation of a reference object of the second data relative to a reference object of the first data is greater than a first threshold.

8. The method according to claim 7, wherein the reference object comprises a reference point, and/or the reference object comprises a normal vector, wherein
when the reference object is the reference point, the degree of variation of the reference object of the second data is a value of a distance between a reference point of the first data and a reference point of the second data; or
when the reference object is the normal vector, the degree of variation of the reference object of the second data is an included angle between a normal vector of the first data and a normal vector of the second data.

9. The method according to claim 7 or 8, wherein before sending, by the first device, the second information to the second device, the method further comprises:
receiving, by the first device, first configuration information sent by the second device, wherein the first configuration information is used to configure the reference object and the first threshold.

10. The method according to any one of claims 1 to 9, wherein sending, by the first device, the second information to the second device comprises:
receiving, by the first device, a first request message sent by the second device, wherein the first request message is used to request to obtain the second information; and
sending, by the first device, the second information to the second device in response to the first request message.

11. The method according to any one of claims 1 to 10, wherein before sending, by the first device, the second information to the second device, the method further comprises:
receiving, by the first device, first indication information sent by the second device, wherein the first indication information indicates one or more of a geometry type supported by the second device, attribute information supported by the second device, and a position information indication manner supported by the second device.

12. The method according to claim 2, wherein the geometry type comprises at least one of the following: a point, a line, a surface, a voxel, a sphere, a polyhedron, and an octree; and the attribute information comprises at least one of the following: texture pixel density, a color, magnetic permeability, a dielectric constant, and a scattering coefficient.

13. A communication method, wherein the method comprises:
obtaining, by a second device, first data of a first environment;
sending, by the second device, first information to a first device based on the first data, wherein the first information is used for the first device to collect second data of the first environment, the second data is incremental data relative to the first data, and the first information comprises one or more of a geometry type of the first data, attribute information of the first data, and position information of the first data; and
receiving, by the second device, second information sent by the first device, wherein the second information comprises the second data.

14. The method according to claim 13, wherein the second information further comprises one or more of a geometry type of the second data, attribute information of the second data, and a relative positional relationship of the first data.

15. The method according to claim 13 or 14, wherein obtaining, by the second device, the first data of the first environment comprises:
receiving, by the second device, the first data of the first environment that is sent by a third device, wherein the third device is different from the first device.

16. The method according to claim 13 or 14, wherein obtaining, by the second device, the first data of the first environment comprises:
collecting, by the second device, the first data of the first environment.

17. The method according to any one of claims 13 to 16, wherein before receiving, by the second device, the second information sent by the first device, the method further comprises:
sending, by the second device, a first request message to the first device when detecting that a degree of variation of a reference object of the second data relative to a reference object of the first data is greater than a first threshold, wherein the first request message is used to request to obtain the second information.

18. The method according to any one of claims 13 to 16, wherein receiving, by the second device, the second information sent by the first device comprises:
receiving, by the second device, the second information sent by the first device when the first device detects that a degree of variation of a reference object of the second data relative to a reference object of the first data is greater than a first threshold.

19. The method according to claim 17 or 18, wherein the reference object comprises a reference point, and/or the reference object comprises a normal vector, wherein
when the reference object is the reference point, the degree of variation of the reference object of the second data is a value of a distance between a reference point of the first data and a reference point of the second data; or
when the reference object is the normal vector, the degree of variation of the reference object of the second data is an included angle between a normal vector of the first data and a normal vector of the second data.

20. The method according to any one of claims 17 to 19, wherein before sending the first request message to the first device, the method further comprises:
receiving, by the second device, first configuration information sent by the first device, wherein the first configuration information is used to configure the reference object and the first threshold.

21. The method according to any one of claims 13 to 20, wherein the first information further comprises resolution information of the first data and/or the first environment map corresponding to the first data.

22. The method according to any one of claims 13 to 21, wherein before sending, by the second device, the first information based on the first data, the method further comprises:
sending, by the second device, first indication information to the first device, wherein the first indication information indicates one or more of a geometry type supported by the second device, attribute information supported by the second device, and a position information indication manner supported by the second device.

23. The method according to claim 14, wherein the geometry type comprises at least one of the following: a point, a line, a surface, a voxel, a sphere, a polyhedron, and an octree; and the attribute information comprises at least one of the following: texture pixel density, a color, magnetic permeability, a dielectric constant, and a scattering coefficient.

24. A communication device, wherein the device comprises a processor and a memory, the processor is coupled to the memory, the memory is configured to store a computer program, and when the processor runs the computer program, the device is enabled to perform the method according to any one of claims 1 to 12, or perform the method according to any one of claims 13 to 23.

25. A computer-readable storage medium, wherein the computer-readable storage medium stores computer instructions, and when the computer instructions are run on a device, the device is enabled to perform the method according to any one of claims 1 to 12, or perform the method according to any one of claims 13 to 23.

26. A computer program product, comprising instructions, wherein when the computer instructions are run on a device, the device is enabled to perform the method according to any one of claims 1 to 12, or perform the method according to any one of claims 13 to 23.

27. A chip, wherein the chip comprises a processor and a communication interface, the processor reads instructions through the communication interface and runs the instructions, and when the chip is mounted in a device, the device is enabled to perform the method according to any one of claims 1 to 12, or perform the method according to any one of claims 13 to 23.

28. A communication system, wherein the communication system comprises a first device and a second device, wherein
the first device is configured to perform the method according to any one of claims 1 to 12, and the second device is configured to perform the method according to any one of claims 13 to 23.
